# EUROPEAN PATENT APPLICATION

(11) **EP 4 600 866 A1**
(43) Date of publication of application: **13.08.2025**
(21) Application number: 24156953.2
(22) Date of filing: 09.02.2024
(51) Int. Cl.: G06N 3/045, G06N 5/022, G06F 16/332, G06F 40/35

(54) **SYSTEMS AND METHODS FOR A CONVERSATIONAL ARTIFICIAL INTELLIGENCE AGENT**

(71) Applicant: APPELLA AI LIMITED, London W12 7RZ (GB)
(72) Inventor: DRAYSON, George, London (GB); DRAYSON, James, London (GB); ALESHWARAM, Sujith, London (GB); DRAYSON, Paul, London (GB)
(74) Representative: Leach, Sean Adam

(57) **Abstract**

A computer-implemented method and system is provided for improving the reliability of conversational artificial intelligence agents and reducing incidence of Al hallucination. In particular, the method comprises obtaining sensor data, and comparing the sensor data to at least a first portion of a stored framework, wherein the stored framework provides guidance for a conversational artificial intelligence (Al) agent to respond, based on sensor data. Based on the comparison, the method identifies at least a portion of data which is required by the stored framework, and determines a query based at least in part on the identified portion of data. The method then obtains a response to the query, and compares the response to a different portion of the stored framework, wherein the portion of the stored framework is selected based on the response to the query. Based on the comparison, the method then performs at least one of: (i) sending a signal to perform an action, based on the second comparison; or (ii) identifying at least another portion of data which is required by the stored framework, and determining another query based at least in part on the identified portion of data.

## Description

### Field of the invention

The present disclosure relates to systems and methods for a conversational artificial intelligence agent, in particular to systems and methods for improving the reliability of conversational artificial intelligence agents and reduce incidence of hallucination.

### Background

Artificial intelligence (Al) hallucination is a phenomenon wherein a large language model (LLM) outputs a response that is nonsensical, false, or inaccurate. This may arise due to various factors, including incorrect data input, limited contextual understanding, overfitting, training data bias/inaccuracy and high model complexity. As a result, Al algorithms may produce outputs that are not based on their training data, are nonsensical, not real or inaccurate.

Furthermore, as LLMs typically rely on user input being complete, correct, and truthful, LLMs are also easy to manipulate and misdirect.

Incorrect and/or incomplete input data and training data can each cause AI models to output inaccurate and incorrect responses or decisions. Preventing issues with generative technologies can prove challenging, however incorrect, incomplete, and/or inaccurate outputs can have significant consequences for real-world applications.

There is therefore a need for improved systems and methods for a conversational artificial intelligence agent, for example to improve decision-making and control using Al models, including improving the reliability of operation and reducing the incidence of AI hallucination.

### Summary of the invention

Aspects of the invention are as set out in the independent claims and optional features are set out in the dependent claims. Aspects of the invention may be provided in conjunction with each other and features of one aspect may be applied to other aspects.

An aspect of the invention relates to a computer-implemented method for a conversational artificial intelligence (Al) agent (or "Al detective"), the method comprising:
obtaining sensor data;
comparing the sensor data to at least a first portion of a stored framework, wherein the stored framework provides guidance for a conversational artificial intelligence (Al) agent to respond, based on sensor data;
based on the comparison, identifying at least a first portion of data which is required by the stored framework;
determining a query based at least in part on the identified first portion of data;
obtaining a response to the query;
comparing the response to the query to at least a second portion of the stored framework, wherein the second portion of the stored framework is selected based at least in part on the response to the query; and
at least one of:
   (A) sending a signal to perform an action, based on the second comparison; or
   (B) identifying at least a second portion of data which is required by the stored framework based on the second comparison, and
      determining a second query based at least in part on the identified second portion of data.

Comparing data to a stored framework which provides guidance to a conversational Al agent may be advantageous to reduce the incidence of AI hallucinations. For example, the stored framework may be configured to provide a set of guardrails, within which the conversational AI agent can respond and act accordingly. As well as reducing the incidence of AI hallucinations, this may also reduce the risk of implementing conversational AI agents in a variety of applications, including wherein the conversational AI agent is configured to provide control signals to auxiliary systems, or otherwise where an LLM alone may be easily manipulated or misdirected by a user.

Determining a query based at least in part on an identified first portion of data based on the comparison, may also be advantageous to reduce the incidence of AI hallucinations and improve automated decision-making by an AI agent. A problem associated with conventional conversational AI agents is that they rely on the input data and training data being correct and complete. Incorrect and incomplete data can cause AI models to output inaccurate and incorrect responses or decisions. However, by comparing the sensor data to a stored framework, identifying at least a first portion of data which is required by the stored framework, and thereby determining a query based at least in part on the identified first portion of missing data, the method is able to identify and detect incidences of incorrect and/or incomplete input data, as well as request the required missing or correct data. As such, the incidence of AI models outputting inaccurate and incorrect responses based on incorrect or incomplete data is reduced. The present method may therefore improve decision-making and control using AI models, for example by facilitating the AI agent to employ data extraction techniques to supplement the input data.

If the method determines a second query, the method may then proceed to repeat the steps of obtaining a response to the recent query, and comparing the response to the second query to at least another portion of the stored framework, wherein the portion of the stored framework is selected based at least in part on the response to the recent query. The method may then also proceed to (i) send a signal to perform an action, based on the recent comparison; and/or (ii) identify at least another portion of data which is required by the stored framework based on the second comparison, and determine another query based at least in part on the identified first portion of data.

If the method sends a signal to perform an action, the signal may also be compared to at least another portion of the stored framework, wherein the portion of the stored framework is selected based at least in part on the signal sent to perform the action. Again, the method may then also proceed to (i) send a signal to perform an action, based on the recent comparison; and/or (ii) identify at least another portion of data which is required by the stored framework based on the second comparison, and determine another query based at least in part on the identified first portion of data.

The signal to perform an action may include, but is not limited to, a signal to output a decision, a signal to output a response to a user (for example, using an LLM), a signal to effect a computer interaction, a signal to prompt or adjust the LLM (used for outputting queries and/or responses), a signal to prompt or adjust existing AI models (used for data analysis with the framework), or a signal to end the communication link. A computer interaction could include, but is not limited to, any interaction between the processor and an auxiliary system. For example, in the case where the sensor data relates to a real-time telephony call, a signal to perform an action could comprise a signal to system of end the call, transfer the call, forward the call to voicemail, etc.

This cycle of sending a signal to perform an action, and/or determining a query and obtaining a response, followed by comparison to the framework may repeatedly loop until the communication link is ended. Ending of the communication link may be effected by the processor sending a signal to end the communication link, for example wherein sending the signal to end the communication link is one of a possible set of signals to perform an action, based on comparison with the framework.

Determining a query may comprise determining a query for a user. For example, determining a query for a user may comprise assembling a text string, and outputting the text string to a user equipment device. Determining a query may comprise generating the query using a large language model, LLM. Optionally, determining a query for a user may comprise assembling a text string, converting the text string to audio (e.g., text to speech), and outputting the audio to a user equipment device. Obtaining a response to a query from a user may comprise (i) obtaining text data, and/or (ii) obtaining audio data, and converting the audio data to a text string via speech to text. Determining a query for a user may be advantageous as it allows the AI agent to request data from a user. This may be particularly advantageous for data extraction for improved decision making where data is required which is not available from other sensors or other loT devices. This may also be advantageous to verify data in the event of anomalous obtained sensor data (or lack thereof), thereby allowing the AI agent to request and obtain data from another source (e.g. the user). This may be particularly advantageous for improved decision-making and control of AI agents in the event of sensor failure or fault, as the AI agent does not rely on the input sensor data being correct and complete.

Alternatively, or in addition, determining a query may comprise requesting additional sensor data from at least one sensor. The at least one sensor may be the same sensor from which the initial sensor data was obtained, or alternatively the at least one sensor may comprise at least one different sensor. Requesting additional sensor data from the at least one sensor may be advantageous to allow the AI agent to extract additional data, be that corroborating verification data from another sensor, or supplementary data to further inform the AI agent in decision making.

The obtained response to the first query may comprise context information, for example related to the obtained sensor data. Determining a second query may then comprise requesting additional sensor data associated with the context information. For example, the context information may comprise a relevant time window. The skilled person will understand the time window can be in the past, in real time, or in the future. Obtaining context information and determining a query based on requesting additional sensor data associated with the context information may be advantageous for focussed / targeted data extraction, for example but not limited to a specific time window, for improved decision making by the AI agent. For example, if a response to the first query states that "I felt very unwell last night", analysis of the response may identify the relevant context information of "last night". In response, the method may then send a query at least one sensor to retrieve medical sensor data, or otherwise, relating to the previous evening (i.e. "last night").

The stored framework may provide guidance for a conversational artificial intelligence (Al) agent to respond, based on sensor data. For example, the stored framework may provide guidance for a conversational artificial intelligence (Al) agent to respond in a conversation conducted by the AI agent, such as in the form of a response to a conversational prompt provided by the other party to the conversation. Typically such a prompt may be received in the form of audio data, which may be transcribed to text or other data conveying semantic meaning according to the methods described herein and other methods which will be apparent to the skilled addressee in the context of the present disclosure. The stored framework may comprise a conversation map, wherein the conversation map comprises a plurality of possible conversation directions for the conversational artificial intelligence (Al) agent. The conversation map may be a dynamic conversation map, configured to be dynamically updated or changed based on the data obtained during the conversation, for example based on the queries and responses. For example, the data obtained during the conversation, e.g. based on the queries and responses, may be analysed by at least one AI model, wherein the dynamic conversation map is dynamically updated based on the analysis by the at least one AI model. For example, a portion of the conversation map may be dynamically selected based on (i) said sensor data and/or (ii) said response to the query.

Determining a query may be based at least in part on the stored framework. For example, determining a first query may be based at least in part on the first portion of the stored framework.

Optionally, comparing the sensor data to at least the first portion of a stored framework may be initiated based on the obtained sensor data meeting a trigger condition. This may be advantageous to reduce utilisation of computing power and resources when no action is likely to be required. As an example, a trigger condition may be met through anomaly detection, and/or predetermined thresholds being met, etc.

At least one trigger condition being met may also initiate a communication link or establish a channel being established between the conversational agent and another party. The other party could be a human user, or another AI model. As one example, establishing a communication channel may include establishing a telephony call between the conversational agent and the other party, however the skilled person will understand that this is not limiting. Other non-limiting examples include establishing a text-based chat communication channel with the other party.

In some examples, the method may comprise storing data representing at least a portion of the response as unstructured and/or structured data; wherein comparing the response to the query to at least a second portion of the stored framework comprises analysing the unstructured and/or structured data. For example, the method may further comprise determining context information based at least in part on the unstructured and/or structured data. Optionally, analysis of the unstructured and/or structured data can be carried out using at least one artificial intelligence (Al) model.

Sensor data may include any data obtained by a sensor, or multiple sensors. Sensor data may also include any data obtained from a user, for example by way of user input. Sensor data may include, but is not limited to, at least one of numerical data, text data, audio data, image data, video data, medical data, environmental data, location data, time data. In some examples, sensor data may comprise audio data from a telecommunication call.

Receiving the sensor data may comprise, but is not limited to, obtaining the sensor data from a stream of sensor data, for example from a stream of real-time sensor data. Alternatively, or in addition, the processor may receive sensor data periodically, or upon sensor activation etc.

Comparing obtained data to the framework may comprise comparing a stream of sensor data to the framework. Alternatively, sensor data may be stored in a data store before comparing to the framework. The data store may be a part of the framework itself, or stored separately to the framework. The data store may additionally comprise pre-defined data obtained outside of the conversation with the AI conversational agent, for example wherein pre-defined data may include, but is not limited to, company information or data.

The comparison of the data and the framework may be performed or assisted by at least one AI Model or a plurality of AI Models. Example AI models used for comparison of data with the framework may include, but are not limited to, Natural Language Processing models, Large Language Models, Computer Vision/Imaging models, Audio models, multimodal models, etc.

Upon obtaining sensor data, the method may further comprise storing the sensor data to a data store. The data store may then be compared to at least the first portion of the stored framework. Upon obtaining a response to a query, the method may then further comprise updating the data store to store data representing at least a portion of the response. The updated data store may then be compared to at least the second portion of the stored framework.

An aspect of the invention also relates to a computer-implemented method for a conversational artificial intelligence (Al) agent (or "Al detective"), the method comprising:
obtaining sensor data;
comparing the sensor data to at least a first portion of a stored framework, wherein the stored framework provides guidance for a conversational artificial intelligence (Al) agent to respond, based on sensor data;
at least one of:
   (A) based on the comparison, identifying at least a first portion of data which is required by the stored framework;
      determining a query based at least in part on the identified first portion of data;
      obtaining a response to the query;
      comparing the response to the query to at least a second portion of the stored framework, wherein the second portion of the stored framework is selected based on the response to the query; or
   (B) based on the comparison, sending a signal to perform an action; and
      comparing the action to at least a second portion of the stored framework, wherein the second portion of the stored framework is selected based on the sensor data and action;
based on the comparison with the second portion of the stored framework (for either of A or B), the method further comprises at least one of:
   (A) sending a signal to perform an action, based on the second comparison; or
   (B) identifying at least a second portion of data which is required by the stored framework based on the second comparison, and
      determining a query based at least in part on the identified second portion of data.

The skilled person will understand that any features disclosed above in relation to the first aspect of the invention may also apply to the second aspect.

In an aspect there is provided a computer system for implementing a conversational artificial intelligence (Al) agent, the apparatus comprising:
processing logic;
a communication interface, coupled to the processing logic and configured to provide communication between the processing logic and at least one sensor for obtaining sensor data; and
a data store, storing:
   a stored framework comprising computer readable data configured to be read by the processing logic to provide guidance for a conversational artificial intelligence (Al) agent to respond, based on said sensor data;

wherein the processing logic is configured to:
   obtain sensor data,
   identify, based on the sensor data and at least a first portion of a stored framework, at least a first portion of data which is required by the stored framework;
   determine a query based at least in part on the first portion of data;
   obtain a response to the query;
   select, based on the response to the query, a second portion of the stored framework; and
wherein the processing logic is further configured to, at least one of:
   (A) send a signal to perform an action, wherein the action is selected based on the response to the query and the second portion of the stored framework; and to
   (B) identify at least a second portion of data which is required by the stored framework based on the response to the query and the second portion of the stored framework, and to determine a second query based at least in part on the identified second portion of data.

In an embodiment selecting, based on the response to the query, a second portion of the stored framework, comprises comparing the response to the query with the stored framework.

In an embodiment the processing logic is configured to perform any one or more of the methods described herein.

The computer readable data of the stored framework may be configured to be read by the processing logic to provide guidance for a conversational artificial intelligence (Al) agent to respond in a conversation conducted by the AI agent, based on said sensor data.

In an embodiment the communication interface is operable to establish a communication channel between the AI agent and at least one user of the system, such as a human user. The communication channel may be established via a user equipment (UE) device.

In an embodiment, the sensor is coupled to or provided by the UE device. For example, the sensor may comprise an audio channel provided by the UE device.

In another aspect of the invention, there is provided a computer program product comprising instructions configured to program a programmable device to perform the method of any preceding aspect of the invention.

### Drawings

Embodiments of the disclosure will now be described, by way of example only, with reference to the accompanying drawings, in which:
Fig. 1 shows an example schematic illustrating a computer-implemented method of the present invention.
Fig. 2A shows an example block diagram of a system configured to perform the method of the present invention, such as the method of Fig. 1.
Fig. 2B shows an example block diagram of a remote server configured to perform the method of the present invention, such as a remote server for use in the system of Fig. 2A.
Fig. 3 shows an example schematic illustrating an alternative computer-implemented method of the present invention.

### Specific description

Embodiments of the claims relate to systems and methods for a conversational artificial intelligence agent, in particular to improve the reliability of operation of conversational artificial intelligence agents and reduce incidence of hallucination.

It will be appreciated from the discussion above that the embodiments shown in the Figures are merely exemplary, and include features which may be generalised, removed or replaced as described herein and as set out in the claims.

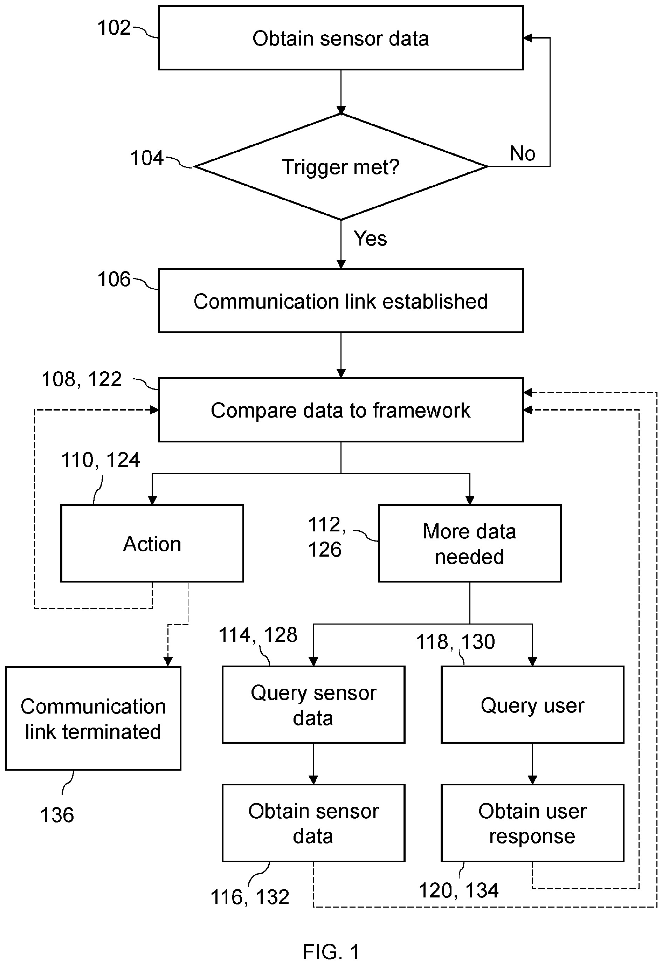

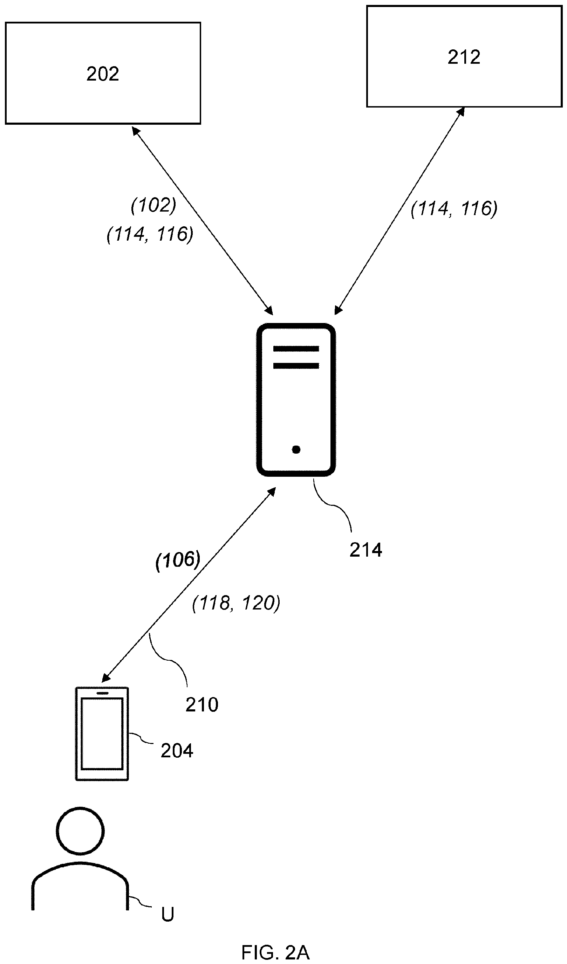

Fig. 1 shows an example schematic illustrating a computer-implemented method of the present invention. In the example described herein, the method of Fig. 1 is disclosed as being implemented by the system of Fig. 2A, however the skilled person will understand that other systems may be used to perform the method of Fig. 1.

The system of Fig. 2A comprises a user equipment device 204, a remote server 214, and a plurality of sensors 202, 212. The remote server 214 is preferably hosted in the cloud, for example as a cloud server.

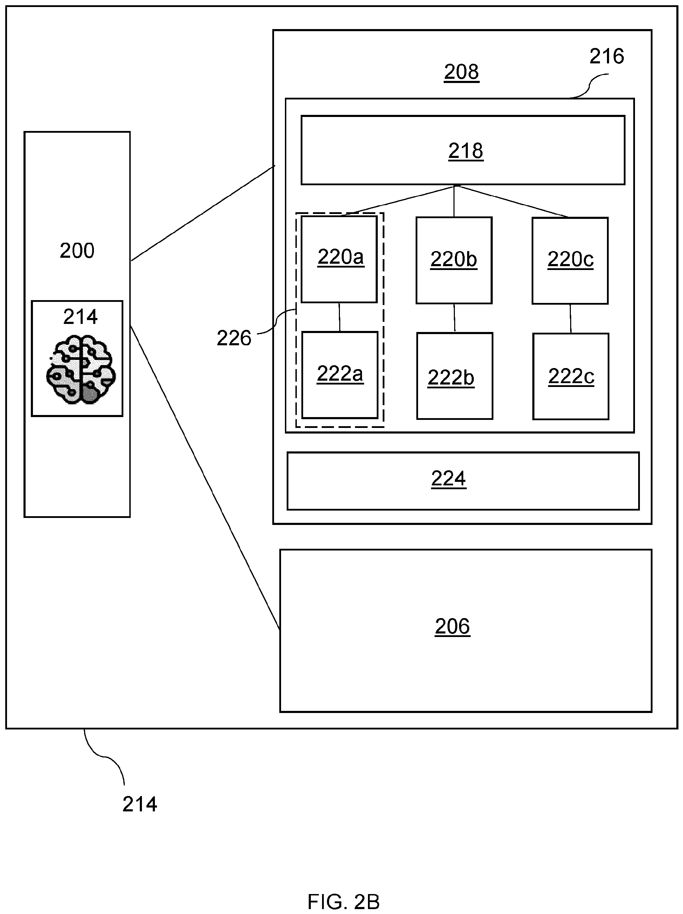

The user equipment device 204 is configured to wirelessly communicate with the remote server 214, for example via a communication channel 210. The user equipment device 204 is shown in Fig. 2 as a smartphone, however the skilled person will understand that the user equipment device may be any device configured to wirelessly communicate with the remote server 214, wherein the user equipment device further comprises (i) a means to communicate signals to a user, for example via a speaker and/or a display screen, and (ii) a user input means configured to receive user input, such as but not limited to a microphone, touch screen, and/or keyboard.

A sensor may be a device which is configured to detect or measure an indication of a physical property, event, or action, and convert the indication into a signal that can be interpreted by the processor 200. The system of Fig. 2A comprises two sensors 202, and 212, however the skilled person will understand that other systems comprising at least one sensor 202 may be used. Fig. 2A illustrates an embodiment wherein the sensors 202 and 212 are separate to the user equipment device 204, however the skilled person will also understand that in other embodiments, at least one sensor may be integrated into the user equipment device. At least one sensor is configured to provide a stream of audio data, for conducting a conversation with a user. Additional sensors are configured to provide auxiliary sensor data obtained based on an indication of a physical property, event, or action.

An example remote server 214 is shown in more detail in Fig. 2B, wherein the remote server 214 comprises a processor 200, a memory 208, and an additional read-write data store 206. The processor 200 comprises an analysis engine 214, wherein the analysis engine is configured to run a plurality of AI models. As shown in Fig. 2B, the memory 208 comprises a framework 216. The framework 216 comprises data stored in a volatile or non-volatile structure, accessible to the processor 200, such as a data table, data frame, decision tree, or flow chart, configured to be accessible by the processor 200. The framework 216 stores data relating to a plurality of possible actions 222 which may be effected by the processor 200, and minimum data requirements for each action 220, indexed according to semantic context 218.

A processor 200 obtains a stream of real-time sensor data from at least one sensor 202 (102). Sensor data is preferably obtained by the processor wirelessly, for example via Internet-Of-Things (IoT) communication.

The processor 200 compares the sensor data to a set of trigger thresholds 224 (104), stored in memory 208. In the event that no trigger thresholds 224 are met, the processor continues to obtain the stream of sensor data which is repeatedly compared to the set of trigger thresholds 224. In the event that at least one trigger threshold is met, the method proceeds by establishing a communication channel 210 between a conversational AI agent and a user, U (106).

In the example shown in Fig. 2, establishing a communication channel 210 between a conversational AI agent and a user, U, comprises establishing a communication channel 210 between the AI agent and a remote user equipment device 204 of the user, such as a user smartphone.

The processor 200 may optionally store the obtained sensor data to a read-write data store 206.

The processor 200 then compares the sensor data to at least a first portion of a framework (108). The stored framework is configured to provide guidance for the conversational artificial intelligence (Al) agent as to how to respond, based on obtained sensor data and its semantic context.

As one example, the stored framework may comprise a conversation map, wherein the conversation map comprises a plurality of possible conversation directions for the conversational artificial intelligence (Al) agent. The conversation map may be in the form of a data frame, decision tree, or flow chart; however the skilled person will understand that this is not limiting, and other suitable methods of mapping conversation directions may be used.

The framework stores a plurality of possible actions 222 for the conversational AI agent to implement (for example by sending a signal to effect the action). However, the conversational map also stores a plurality of minimum data requirements 220 that are indexed according to each stored action 222. The minimum data requirements 220 and plurality of possible actions 222 may be further indexed according to semantic context 218 of the sensor data. For example, the data framework may index the minimum data requirements 220 and semantic context 218 for each possible action. Accordingly, in order for the processor to perform a specific action 222, the data framework may require that a specific data object is known (minimum data requirement 220), and that semantic analysis of the specific data object aligns with a semantic context 218 of the stored action.

As such, in order for the AI agent to send a signal to perform an action, it is necessary that the comparison with the conversational maps yields that all minimum data requirements have been fulfilled (i.e. all required data for that action is stored in the data store, and that semantic conditions relating to the known data are satisfied) before the associated action can be taken by the AI agent.

The conversation map is therefore configured to map past conversation and potential future directions of the conversation based on guidelines and analysis of the obtained sensor data. This may be advantageous to keep queries and/or actions relevant, and reduce the likelihood of AI hallucinations. Analysis of the sensor data may be performed by an analysis engine 214, preferably comprising at least one AI model.

For example, the processor 200 obtains data from a sensor 202. The analysis engine 214 of the processor 200 analyses the obtained sensor data to determine a semantic context of the obtained sensor data. The analysis engine 214 may comprise a plurality of AI models configured to analyse the stored data. The analysis engine may include, but is not limited to, any of Natural Language Processing models, Computer Vision/Imaging models, Audio models, multimodal models, etc.

The processor 200 then identifies a relevant portion of the framework based on the determined semantic context of the sensor data, such as portion 226. The identified portion 226 of the framework stores a set of minimum data requirements 220a.

The processor 200 compares the obtained sensor data to the set of minimum data requirements 220a stored by a portion 226 of the framework 216.

Based on the comparison, the processor 200 then identifies whether all minimum data requirements 220a are fulfilled by the obtained sensor data. In this case, the processor 200 determines that not all minimum data requirements 220a are fulfilled by the obtained sensor data. As such, the processor 200 identifies a first portion of data which is required by the framework, based on the comparison of the sensor data and the minimum data requirements 220a. The identified first portion of data may be required by the stored framework, for example, in order to make a decision or perform an action, such as action or decision 222a.

The AI agent of the processor 200 then determines a query based at least in part on the identified first portion of data. This may be advantageous to identify erroneous, or missing input data, and generate a query in order to extract further input data to better inform the AI agent, and thus its ability to make an appropriate decision, or perform a correct action.

In this example, determining a query includes the processor 200 signalling to a Large Language Model, LLM, to generate a text string query for a user based on the identified first portion of data which is required by the framework.

The text string query is then converted to audio data, via a text to speech module. The processor 200 then signals to send the audio data to the user equipment device. The audio data is then sent to the user equipment device 204 via the communication channel 210 to communicate the query to the user, U.

In response, the processor 200 then receives a response to the query from the user equipment device 204, via the communication channel 210 (120). The response to the query is stored to a data store, for example wherein the data store 206 comprising the obtained sensor data is updated to additionally comprise at least a portion of the response to the query.

The analysis engine 214 of the processor 200 analyses the data from the updated data store 206, including the obtained response, to determine a sematic context of the complete obtained data.

The processor 200 then identifies a relevant portion of the framework based on the determined semantic context of the sensor data. The relevant portion of the framework may be the same as that previously identified 226, however the portion of the framework identified may be different, for example in the event that the semantic context of the conversation data has changed or shifted. This may be advantageous to allow the conversation map to be dynamically updated or changed based on the response data generated during the conversation.

As before, the identified portion of the framework stores a set of minimum data requirements 220. The processor 200 compares the obtained sensor data to the set of minimum data requirements 220 stored by the identified portion of the framework (122).

Based on the comparison, the processor 200 then identifies whether all relevant minimum data requirements 220 are fulfilled by the obtained sensor data. Comparisons of stored data, including the sensor data and/or user responses to queries, to the framework may be performed by the analysis engine 214.

Based on the comparison (122), the processor 200 will perform at least one of the following:
(i) send a signal to perform an action, based on the comparison (124); or
(ii) identify another portion of data which is required by the stored framework, based on the comparison (126).

In this example, the processor 200 determines that all minimum data requirements are fulfilled by the conversation data. As such, the processor 200 may signal to perform an action (124), for example wherein the action 222 is indexed in the framework 216, based on the minimum data requirements 220. The action may comprise signalling to effect any computer interaction, for example to perform an action to fulfil a purpose. Alternatively, or in addition, the signal to perform an action may comprise a signal to output a decision, or generate a response to output to a user. Once the processor has sent the signal to effect an action, the sending of the signal may optionally be stored to the data store 206.

The updated data store 206 is then compared to the framework again (122), and the method continues to cycle described as above.

Sending a signal to perform an action may also comprise sending a signal to end the communication channel 210. Once the processor 210 has signalled to end the communication channel 210, for example based on a comparison with the framework, the method terminates (136).

Alternatively, the processor may identify another portion of data which is required by the stored framework (126). In this case, the processor then determines another query based at least in part on the comparison with the framework, and optionally at least in part on the obtained response from the first query. The obtained response is then compared to the framework again (122), alongside the conversation data, and the method continues to cycle described as above.

Whilst the method disclosed above describes an embodiment wherein the processor obtains a stream of real-time sensor data, the skilled person will understand that in other embodiments, the processor may receive sensor data periodically, or upon sensor activation etc.

Furthermore, whilst the method described above discloses that the processor compares the sensor data to a set of trigger thresholds, the skilled person will understand that alternative trigger conditions may be used, for example including, but not limited to, wherein the method applies at least one anomaly detection method to the sensor data. In the event that no anomalous sensor data is detected, the processor continues to obtain the stream of sensor data which is continuously analysed by the anomaly detection method. In the event that anomalous sensor data is detected, the method proceeds by establishing a communication channel 210 between a conversational AI agent and a user, U (106).

The method above also discloses generating a query using a large language model (LLM), however the skilled person will understand that queries may alternatively be determined in other ways, for example by selecting a query from a set of predetermined queries stored in the framework. As described above, the conversation map may store a plurality of minimum data requirements 220 that are indexed according to a set of stored possible actions 222. Based on a comparison between the framework and the obtained data, the processor may identify at least a first portion of data which is required by the stored framework in order to make a decision or perform an action. The processor may then select at least one query from a set of queries stored by the framework, wherein the query is selected based on a common semantic objective to obtain the identified portion of absent data, from a user, a sensor, or otherwise.

The method above also discloses that a text string query is converted to audio data by a text to speech module, however the skilled person will understand that this is optional. In other embodiments, the query may be sent to the user device as text data comprising the text string, for example for display to a user on a display screen of the user equipment device.

The obtained response to a user query may be obtained by the processor 200 as audio data, where it may subsequently be transcribed by a speech to text module. Alternatively, the response may be obtained as text data, or any other media, such as image data.

The method above also discloses generating a query for a user; however, alternatively, or in addition, the determined query may comprise a request for additional sensor data (114) from the sensor from which the triggering sensor data was received 202, or a request for sensor data from at least one additional sensor, such as sensor 212. In such examples, the processor 200 sends a signal to at least one sensor (sensor 202, sensor 212, or otherwise) to communicate the query to the relevant sensor or otherwise obtains the relevant additional sensor data from the sensor, for example by reading it. In response, the processor 200 then receives the additional sensor data from the sensor (sensor 202, sensor 212, or otherwise) (116). The additional sensor data may then optionally be stored to a data store, for example wherein the data store 206 comprising the obtained sensor data is updated to additionally comprise at least a portion of the additional sensor data. The additional sensor data may then be compared to the framework as described above.

It will be understood that the methods and systems described herein for improved operation and decision-making using conversational AI agents will have numerous applications. As such, the sensor data received, generated queries, and signals to perform actions will vary significantly based on the application.

Purely for illustration, two different applications have been included below.

### A method and system for detection and management of scam and spam calls.

As one example, there may be provided a method and system for detection and management of non-legitimate calls, such as scam and spam calls.

The processor obtains sensor data providing an indication of an incoming telecommunication call (102) from a user equipment device. The sensor data may be provided by the user equipment device that is being called, or by a Voice-over-Internet Protocol (VoIP) provider. Obtaining the indication of the incoming telecommunication call is a sufficient trigger condition (104) to establish a communication channel between the conversational AI agent and a user (106), in this case the user who initiated the telecommunication call. As such, a communication channel is established between the conversational AI agent and the user equipment device which initiated the call.

The conversational agent may obtain a stream of real-time audio data from the user, via the telecommunication call, e.g. "Hello, I would like to speak to the finance director". The sensor data is provided by the user equipment device that is being called, or by a Voice-over-Internet Protocol (VoIP) provider.

The processor comprises a speech to text processing module, wherein the speech to text processing module comprises a speech recognition model configured to generate a transcription of audio stream from the telecommunication call, for example by speech to text transcription.

An analysis engine, such as the analysis engine 214 described with reference to Fig. 2B, performs semantic analysis on the text data. Based on the semantic analysis, the processor identifies a first portion of the framework, for example related to forwarding calls. The AI conversational agent compares the text data from the generated transcription of audio data to the first portion of a stored framework (such as a decision tree, or guard-rails framework) (108).

As described above, the framework stores a plurality of possible actions 222 for the conversational AI agent to implement, for example such as forwarding the call to an end recipient, for example forwarding the call to the correct department, forwarding the call to a voicemail service, ending the call, etc. However, the conversational map also stores a plurality of minimum data requirements 220 that are indexed according to each stored action. The minimum data requirements 220 may be further indexed according to sensor data and/or semantic data. As an example, in order to forward the call to a specified recipient, such as a specific department, the framework may require that: (i) a probability of the call being a non-legitimate and/or fraudulent scam call is below a predetermined threshold, that (ii) the purpose of the call is known, and that (iii) the specified recipient to which the call is to be forwarded is likely to be the correct recipient for the call. As another example, for a call to be forwarded to a voicemail service, the framework may require that (i) a probability of the call being a fraudulent scam call is below a predetermined threshold, and (ii) the probability of the call being a cold call (or spam call) is above a predetermined threshold. For the processor to send a signal to end the call, the framework may require that (i) the purpose of the call is known, and that (ii) a probability of the call being a non-legitimate call and/or fraudulent scam call is above a predetermined threshold.

As such, in order for the AI agent to send a signal to perform an action 222, it is necessary that the comparison with the conversational maps yields that all minimum data requirements 220 have been fulfilled before the associated action 222 can be taken by the AI agent.

Based on the obtained call data, the AI agent navigates to a first portion of the framework to identify the requirements to forward the call to a specific recipient, such as the finance director.

Based on the comparison of the call data with the framework, the AI agent may identify that in order to forward the call to a specified recipient, such as the finance director, a portion of information which is not available from obtained data related to the call (108), such as the user's purpose of the call, is required by the stored framework before outputting any decision, or action.

The AI conversational agent thus determines a first query based on the identified portion of missing data (118). The query may be generated as a text string by a large language model, LLM, e.g., "Please can you confirm the purpose of your call?". The text string may then optionally be converted by a text to speech module into audio data. The processor then signals to send the audio data (and/or text string) to the user, via the communication channel 210.

The processor receives a response to the first query (120) in the form of audio data from the user equipment device, such as "I am calling from HMRC (HM Revenue & Customs)".

Again, the speech to text processing module generates a transcription of audio data received from the telecommunication call, for example by speech to text transcription.

The text data relating to the transcription of the obtained response is then analysed by an analysis engine. In this example, the analysis engine of the processor may comprise a fraud classification module. The speech to text processing module is configured to communicate with the fraud classification module via an API to send the generated transcription to the fraud classification module. The fraud classification module comprises a fraud classification model configured to perform classification on the transcription generated by the speech to text processing module to determine a probability of the call being fraudulent.

In the example given, if a caller purports to be from HMRC, this is not necessarily a scam and thus a probability score generated based on classification of the text data may indicate a low to moderate risk of the call being a scam.

The analysis engine also makes a comparison of the text data to a second portion of the framework (108), wherein the second portion of the stored framework is selected based at least in part on the text data and/or the probability score output by the fraud classification module - for example, wherein the framework dynamically adapts based on the apparent purpose of the call. As an example, based on the determination that the caller purports to be from HMRC, the framework may require that, in order to forward the call to the finance director, the probability of the call being a fraudulent scam call must be below a first threshold (e.g. call is forwarded if probability of the call being fraudulent is 10% or less), and it must be known if a payment is being requested. However, these requirements may be dynamically adjusted based on the data obtained from the call. For example, if the caller had purported to be a named contact, wherein the named contact is stored in the framework as a trusted caller, in order to forward the call to the finance director, the framework may only require that the probability of the call being a fraudulent scam call is below a second threshold, wherein the second threshold is different to the first threshold (e.g. call is forwarded if probability of the call being fraudulent is 50% or less).

In this case, the comparison with the framework may identify another portion of data which is required by the stored framework in order to determine how to process the call. Based on this comparison, the processor may determine a further query based at least in part on the identified second portion of data (118), e.g., "Are you looking for a payment to be made?". As before, the query may be generated as a text string by a large language model, LLM. The text string may then optionally be converted by a text to speech module into audio data. The processor then signals to send the audio data to the user, via the communication channel 210.

The AI conversational agent receives a response to the second query (120) in the form of audio data, such as "Yes, you must make a payment of £15000". Again, the speech to text processing module generates a transcription of audio data received from the telecommunication call, for example by speech to text transcription.

The transcribed text data is once again processed by the analysis engine, for example wherein the fraud classification module classifies the transcription generated by the speech to text processing module to determine a probability of the call being fraudulent. The analysis engine also takes into account the earlier data previously obtained during the call.

In the example given, whilst a caller purporting to be from HMRC is not necessarily a scam, and similarly a caller requesting a payment also is not necessarily a scam, the combination of the caller purporting to be from HMRC and requesting a payment is considered for by the fraud classification module. Thus, the generated scam probability score may indicate a high probability that the call is a scam call.

The text data from the second response, and/or the generated scam probability score output by the fraud classification module, is also compared to the framework. The framework may provide guidance as to recommended actions based on the text data from the second response and the generated scam probability score. As an example, the framework may recommend that the processor to send a signal to end the call, because the scam probability score is above a predetermined threshold.

As such, based on the comparison with the framework, the processor may send a signal to perform an action, such as ending the communication channel (e.g., ending the call). However, the skilled person will understand that these signals/actions are in no way limiting and other actions may be effected by other signals, such as but not limited to forwarding a call to an intended recipient, forwarding the call to voicemail, etc.

Once the communication channel has ended, the method ceases.

The skilled person will understand that, for the purposes of this application, "real-time" need not be limited to mean "instantaneously" or "at the exact actual time during which a process or event occurs." Instead, "real-time" may be construed to encompass "at a time during the telecommunication call." This means the queries, analysis, and any resultant signals to effect actions, are generated during the telecommunication call. This may be advantageous to effectively classify and action a telecommunication call during the call to better protect the intended recipient of the call from fraudulent or non-legitimate activity during the call. Whilst the example above is primarily discussed in relation to the example of scam calls, the skilled person will understand that is may also equally be applied for identification of spam calls, or otherwise for effective call classification and routing of telephone calls.

### A method and system for monitoring and managing diabetes.

As another example, there may be provided a method and system for improved monitoring and management of diabetes.

A processor obtains sensor data. In this example, the sensor data may comprise blood glucose data from a Continuous Glucose Monitor affixed to a user (102), however the skilled person will understand that this is intended to be purely illustrative and in no way limiting. The processor detects that blood glucose is above a trigger threshold, based on the obtained sensor data. As such, a communication link is established between a conversational AI agent and the user, for example via a user equipment device. The sensor data from the Continuous Glucose Monitor may be stored in a data store.

The stored data, comprising the Continuous Glucose Monitor sensor data, is compared to a first portion of a stored framework (such as a decision tree, or guardrails framework).

Based on the comparison, the conversational AI agent may identify that the stored framework needs to know when insulin was last administered - which is not available from the already stored data.

The AI agent therefore generates a first query based on the missing data relating to when insulin was last administered. For example, generating a query for a user may comprise assembling a text string, for example using a Large Language Model (LLM), and optionally converting the text string to audio (e.g., via text to speech). Purely as an example, the first query may comprise the text string:
"Your blood glucose has gone up recently, did you remember to inject your insulin for lunch?"

The AI agent receives a response to the first query from the user, for example "No, the last time I injected insulin was at breakfast". This response may be obtained as audio data from a microphone of the user equipment device, wherein the audio data is converted to text, for example via speech to text transcription. Alternatively, the response may be obtained as text data based on user input, from the user equipment device.

The response is also stored to the data store. The data store, comprising the response and the Continuous Glucose Monitor data, is then compared to a second portion of the framework, wherein the second portion of the stored framework is selected based on the updated data store - for example, wherein the framework dynamically adapts based on the updated data store.

Based on the second comparison with the framework, the AI agent then:
(A) sends a signal to perform the action, based on the comparison, for example signalling to an insulin pump to administer insulin, or outputting a generated response to recommend that the user administers insulin in the case that no automated insulin pump is present; or
(B) identifies another portion of data which is required by the stored framework, and is not available from the updated data store, such as whether the user has recent eaten, and/or what they have eaten; and
   determines a second query based at least in part on the identified second portion of missing data.

The method may continue to generate queries for the user, and/or, signal to perform actions, until comparison with the framework causes the processor to send a signal to terminate the communication link with the user, for example once a conclusion has been reached, a response has been output to the user (for example as generated by an LLM), and/or corrective action taken.

As above, it will be understood that the two specific applications described herein are purely for illustration and should not be construed to be limiting, indeed it will be understood that the present method and system will have numerous applications.

The method of Fig. 1 and the preceding examples is disclosed with reference to a system, wherein a specific framework is stored in a memory to provide guidance to an AI agent, based on the purpose of the system.

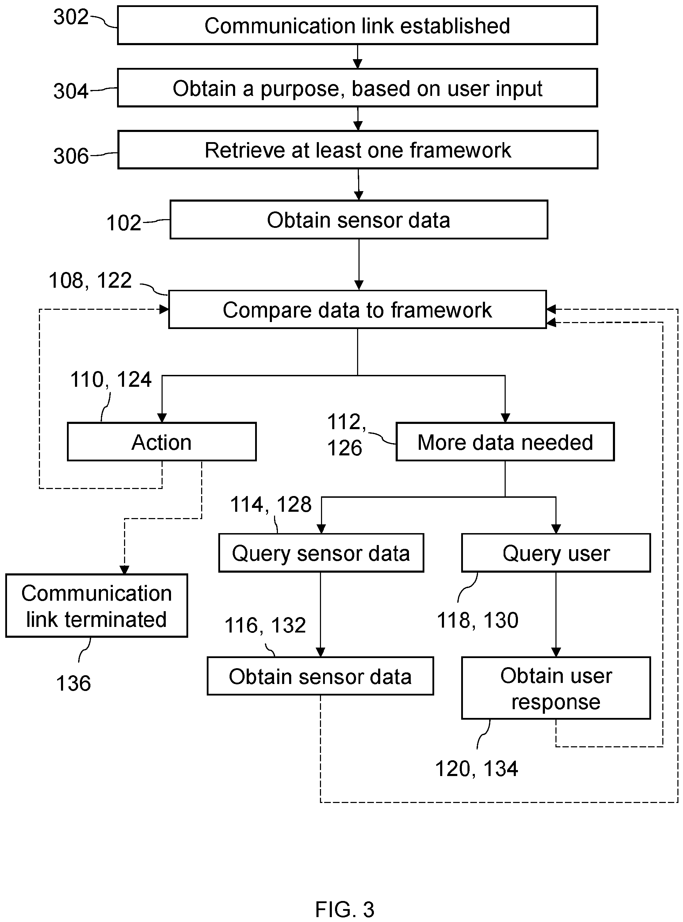

Alternatively, the skilled person will understand that the method may be performed by an unspecialised system comprising a generic large language model (LLM). This may include, for example, but is not limited to, any system running any known large language model, such as ChatGPT (RTM), Google Bard (RTM), etc. An example method for such a system is shown in Fig. 3.

Firstly, a communication channel may be established between a user equipment device and a processor hosting a large language model. The communication channel may be initiated by a user, via the user equipment device.

The processor may then obtain a purpose for the large language model (LLM), based on user input which is sent from the user input device to the processor via the established communication channel. Purely as an example, the obtained user input may comprise an instructed purpose, such as "Act as a spam and scam call detective agent."

The processor then retrieves at least one framework from a stored set of frameworks, wherein the at least one framework is selected and retrieved based on the obtained purpose. As above, each framework may provide guidance for a conversational artificial intelligence (Al) agent (or large language model) as to how to respond for a given purpose. Following the specific example above, the processor retrieves a framework which provides guidance for a conversational AI agent to act as a spam and scam call detective agent.

The processor then obtains sensor data from at least one sensor 202 (102). Receiving the sensor data may comprise, but is not limited to, obtaining the sensor data from a stream, for example from a stream of real-time sensor data. Alternatively, or in addition, the processor may receive sensor data periodically, or upon sensor activation etc. Sensor data is preferably obtained by the processor wirelessly, for example via Internet-Of-Things (IoT) communication. In this example, the sensor data may be audio data from a real-time telecommunication conversation / call.

Optionally, the processor 200 compares the sensor data to a set of trigger conditions (104), associated with the selected framework. However, the skilled person will understand that trigger conditions are not required.

The processor 200 may optionally store the sensor data to a read-write data store 206.

The processor 200 then compares the sensor data to at least a first portion of the selected framework (108). The method may then proceed according to that disclosed in relation to Fig. 1.

The skilled person will also understand that the present invention may incorporate methods of tailoring an unspecialised system comprising a generic large language model (LLM) to perform a specific instructed purpose (or otherwise the system of Figs. 1 and 2), for example by tailoring a framework for that specific instructed purpose using a conversational agent.

For example, firstly, a communication channel may be established between a user equipment device and a processor hosting a large language model ("Al agent"). The communication channel may be initiated by a user, via the user equipment device.

The processor may then obtain a purpose for the large language model (LLM), based on user input which is sent from the user input device to the processor via the established communication channel. Purely as an example, the obtained user input may comprise an instructed purpose, such as "Act as a hotel receptionist."

The processor then retrieves at least one framework template from a stored set of general framework templates, wherein the at least one framework template is selected and retrieved based on the general purpose. As above, each framework template may provide guidance for a conversational artificial intelligence (Al) agent (or large language model) as how to generate a tailored framework, wherein the tailored framework may provide guidance as to how to respond for a given purpose. Following the specific example above, the processor retrieves a framework template for a conversational AI agent to act as a hotel receptionist. The framework template may include a plurality of possible functionalities for the conversational agent, wherein the framework template requires user input to generate a tailored framework based on the framework template.

The processor analyses the framework template to identify at least one portion of information which is required by the framework template to create a functioning, tailored framework for a specific purpose. For example, the processor may identify portions of required information, such as the hotel name, and booking functionality of the framework. Based on the identification of missing information, the AI agent may determine a query for the user, such as "What is your hotel called", "Do you want your AI hotel receptionist to make room bookings?". The processor then obtains user responses to the queries, for example by way of text or audio input from a user equipment device.

Based on the obtained user response, the processor may then modify the framework template to generate a tailored framework for the intended purpose. For example user input may be used to populate the framework template, such as populating the minimum data requirements 220, and allowable actions 222 to be taken by the model.

Once completed, the tailored framework is stored, and the AI conversational agent will be configured to act according to the methods disclosed herein, for example wherein data input is compared to the determined framework in order for the AI conversational agent to send signal(s) to perform an action, and/or determine a query.

This may be advantageous to allow a user to create their own framework to appropriately constrain a conversational AI agent based on their intended use, to implement better operation and decision making of a conversational AI agent, and with reduced risk of AI hallucination.

In the context of the present disclosure other examples and variations of the apparatus and methods described herein will be apparent to a person of skill in the art. It will be appreciated in the context of the foregoing disclosure that the described embodiments are not to be construed as limiting. For example, where ranges are recited these are to be understood as disclosures of the limits of said range and any intermediate values between the two limits. As another example, with reference to the drawings in general, it will be appreciated that schematic functional block diagrams are used to indicate functionality of systems and apparatus described herein. It will be appreciated however that the functionality need not be divided in this way and should not be taken to imply any particular structure of hardware other than that described and claimed below. The function of one or more of the elements shown in the drawings may be further subdivided, and/or distributed throughout apparatus of the disclosure. In some embodiments the function of one or more elements shown in the drawings may be integrated into a single functional unit.

The processor 200 may be provided by one or more distributed services, configured to provide processing logic which performs the function of the processor 200 as described and claimed herein. In some examples the functionality of the controllers and processing means described herein (such as processor 200) may be provided by mixed analogue and/or digital processing and/or control functionality. It may comprise any general-purpose processor, which may be configured to perform a method according to any one of those described herein. In some examples the controller may comprise digital logic, such as field programmable gate arrays, FPGA, application specific integrated circuits, ASIC, a digital signal processor, DSP, or by any other appropriate hardware. In some examples, one or more memory elements can store data and/or program instructions used to implement the operations described herein.

Embodiments of the disclosure provide computer program products such as tangible, nontransitory storage media comprising program instructions operable to program a processor to perform any one or more of the methods described and/or claimed herein and/or to provide data processing apparatus as described and/or claimed herein. Such a controller may comprise an analogue control circuit which provides at least a part of this control functionality. An embodiment provides an analogue control circuit configured to perform any one or more of the methods described herein.

The above embodiments are to be understood as illustrative examples. Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims. These claims are to be interpreted with due regard for equivalents.

## Claims

1. A computer implemented method for a conversational artificial intelligence (Al) agent, the method comprising:
obtaining sensor data;
comparing the sensor data to at least a first portion of a stored framework, wherein the stored framework provides guidance for a conversational artificial intelligence (Al) agent to respond, based on sensor data;
based on the comparison, identifying at least a first portion of data which is required by the stored framework;
determining a query based at least in part on the identified first portion of data;
obtaining a response to the query;
comparing the response to the query to at least a second portion of the stored framework, wherein the second portion of the stored framework is selected based on the response to the query; and
at least one of:
(C) sending a signal to perform an action, based on the second comparison; or
(D) identifying at least a second portion of data which is required by the stored framework based on the second comparison, and
determining a second query based at least in part on the identified second portion of data.

2. The method of any preceding claim wherein determining a query comprises determining a query for a user.

3. The method of any of claim 1 wherein determining a query comprises requesting additional sensor data from at least one sensor.

4. The method of any preceding claim wherein the obtained response to the first query comprises context information; and wherein determining the second query comprises requesting additional sensor data associated with the context information.

5. The method of any preceding claim wherein the stored framework comprises a conversation map, wherein the conversation map comprises a plurality of possible conversation directions for the conversational artificial intelligence (Al) agent.

6. The method of claim 5 wherein a portion of the conversation map for comparison is dynamically selected based on (i) said sensor data and/or (ii) said response to the query.

7. The method of any preceding claim wherein determining a query is based at least in part on the stored framework.

8. The method of any preceding claim, wherein comparing the sensor data to at least the first portion of a stored framework is initiated based on the obtained sensor data meeting a trigger condition.

9. The method of any preceding claim, further comprising establishing a communication channel between the conversational artificial intelligence (Al) agent and a remote device, wherein determining a query further comprises sending a signal via the communication channel to communicate the query to the remote device; and optionally wherein sending the signal to perform an action comprises sending a signal to end the communication channel.

10. The method of any preceding claim, further comprising storing data representing at least a portion of the response as unstructured or structured data; and wherein comparing the response to the query to at least a second portion of the stored framework comprises analysing the unstructured or structured data, optionally using at least one artificial intelligence (Al) model.

11. The method of any preceding claim, wherein sending a signal to perform the action comprises at least one of: sending a signal to output a decision, sending a signal to output a response, sending a signal to output a command, such as a computer interaction, sending a signal to request sensor data, and/or sending a signal to prompt or adjust an AI model underlying the conversational agent.

12. The method of any preceding claim wherein determining a query comprises generating the query using a large language model, LLM.

13. The method of any preceding claim obtaining the sensor data comprises obtaining a stream of sensor data, optionally wherein the sensor data comprises audio data from a telecommunication call.

14. The method of any preceding claim wherein comparing obtained data to at least a portion of the stored framework comprises analysing the obtained data, and comparing the obtained data to a set of requirements obtained from the framework, optionally wherein analysing the obtained data uses at least one AI model.

15. A computer program product comprising instructions configured to program a programmable processor to perform the method of any preceding claim.
